# EUROPEAN PATENT SPECIFICATION

(11) **EP 4 318 285 B1**
(45) Date of publication and mention of the grant of the patent: **19.02.2025**
(21) Application number: 23218535.5
(22) Date of filing: 10.06.2019
(51) Int. Cl.: G06F 21/57

(54) **SECURE VERIFICATION OF FIRMWARE**
SICHERE VERIFIZIERUNG VON FIRMWARE
VÉRIFICATION SÉCURISÉE DE MICROLOGICIEL

(43) Date of publication of application: 07.02.2024
(62) Divisional of application: 19734982.2
(73) Proprietor: Google LLC, Mountain View, CA 94043 (US)
(72) Inventor: SPANGLER, Randall, Mountain View, 94043 (US)
(74) Representative: Marks & Clerk GST

(56) References cited:
- US-A1- 2017 085 383
- US-A1- 2019 108 347

## Description

### BACKGROUND

Some computing systems execute system firmware as part of a "boot" process after powering-on or following a reset. Some computing systems may execute "recovery" firmware instead of the system firmware, to return to a stable, recovered state. For security, the computing systems may maintain portions of the system firmware and recovery firmware in persistent, write-protected areas of system memory that can only be overridden with concurrent physical access to the system memory. Some computing systems further execute a manufacturer's verification process to ensure firmware and recovery firmware integrity, in some cases, using hardware-specific verification keys (e.g., burned into fuses of the application processor) to ensure that system firmware is coming from an official source.

Security and integrity may therefore hinge on a manufacture's proprietary verification process, including the ability to manage the hardware-specific verification keys, as well as the computing system's ability to write-protect system memory. Write protection features can become compromised, for example, by a user who has physical access to the system memory. Over reliance on write-protection features and hardware-specific verification keys that are assigned to hardware during manufacturing may unnecessarily limit usability, customization, and user control over the system firmware and the recovery firmware executed by the computing system.

Prior art document US2019/108347-A1 discloses a processor configured to access boot firmware from a remote location independent from use of a chipset. After a processor powers-on or reboots, the processor can execute microcode. The microcode will cause the processor to train a link with a remote device, which can provide the processor with access to the boot firmware. The processor can copy the boot firmware to the processor's cache or memory. The processor will attempt to authenticate the boot firmware. If the boot firmware is authenticated, the processor executes the copy of the boot firmware.

Prior art document US2017/085383-A1 discloses an information handling system (IHS) that prevents execution of corrupted boot up instructions in flash memory. A memory component contains basic input/ output system (BIOS) instructions to execute during boot up of the IHS. A processor executes instructions to configure the IHS to: (a) calculate a current hash value for the BIOS instructions; (b) obtain a trusted hash value; (c) determine whether the current hash value is identical to the trusted hash value; and (d) allow execution of the BIOS instructions if the values are identical.

### SUMMARY

A computing system is described for securely verifying system firmware and recovery firmware to ensure system integrity without relying on a manufacture's proprietary verification process, hardware-specific keys, or inherent write-protection features of system memory. The computing system relies on a security processor that maintains firmware management parameters which define a process for verifying firmware and recovery firmware independent of an integrated circuit manufacturer's Mask ROM (read-only-memory) verification process. The security processor ensures that the firmware or recovery firmware is signed appropriately and consistent with previously executed versions, or if different, produces verification results (e.g., generated hash values) that are consistent with expected results embedded in the firmware, at compile time. In this way, the computing system improves usability, customization, and user control over the firmware and recovery firmware that is executed within the computing system.

In one example, a computing system is described including an application processor; a memory comprising firmware and corresponding recovery firmware; a security processor configured to configured to verify the firmware or recovery firmware as a condition to the application processor executing the firmware or the recovery firmware by: determining an expected hash of the firmware or the recovery firmware maintained by the firmware; and verifying the firmware or the recovery firmware based on whether the expected hash matches a generated hash of the firmware or the recovery firmware.

In a different example, a method is described that includes determining, by a security processor of a computing system and from firmware stored in a memory of the computing system, an expected hash for the firmware; determining a generated hash for the firmware stored in the memory; and verifying, by the security processor, the firmware in response to determining that the expected hash corresponds to the generated hash.

In yet another example, a computer-readable storage medium includes instructions that, when executed, configure a security processor of a computing system determine, from firmware stored in a memory of the computing system, an expected hash for the firmware; determine a generated hash for the firmware stored in the memory; and verify the firmware in response to determining that the expected hash corresponds to the generated hash.

The details of one or more implementations are set forth in the accompanying drawings and the following description. Other features and advantages will be apparent from the description and drawings, and from the claims. This summary is provided to introduce subject matter that is further described in the Detailed Description and Drawings. Accordingly, this summary should not be considered to describe essential features nor used to limit the scope of the claimed subject matter.

### BRIEF DESCRIPTION OF THE DRAWINGS

The details of one or more aspects of secure verification of recovery firmware are described below. The use of the same reference numbers in different instances in the description and the figures indicate similar elements:
FIG. 1 is a conceptual diagram illustrating an example computing system configured to verify firmware and recovery firmware.
FIG. 2 is a flow-chart illustrating example operations of a security processor configured to verify firmware.
FIG. 3 is a flow-chart illustrating example operations of a security processor configured to verify recovery firmware.
FIG. 4 is a flow-chart illustrating example operations of a security processor configured to perform probabilistic or partial verification of firmware or recovery firmware.
FIG. 5 is a conceptual diagram illustrating a computing device configured to perform secure verification of firmware and recovery firmware.

### DETAILED DESCRIPTION

In some computing systems, an application processor executes system firmware as a condition to loading and executing an operating system (OS). A write-protected portion of system memory may store a read-only portion of the system firmware and a read-writable portion of the system memory may store a read-writeable (or unprotected) portion of the system firmware. The write-protected portion of the system memory can further include specialized "recovery firmware" that computing system executes when operating in a recovery mode. The recovery firmware is intended to execute in place of the system firmware during a recovery event, to configure the computing system to operate in a stable, recovery mode.

During a verified boot process, the security processor of the computing system may prevent the application processor from executing the system firmware until the security processor can verify its own security processor firmware (e.g., "Cr50") stored in an internal memory of the security processor. After verifying and executing the security processor firmware, the security processor enables the application processor to carry-on the verified boot process.

Once enabled, the application processor executes instructions embedded within a "Mask ROM" *(e.g.,* a type of read-only memory internal to the application processor and pre-programmed during manufacturing) for locating and retrieving the read-only portion of the system firmware from the write-protected portion of the system memory. The Mask ROM may configure the application processor to execute a proprietary verification process before executing the read-only portion of the system firmware. For example, the proprietary verification process may cause the application processor to verify that the read-only portion of the system firmware was signed using a unique, hardware-specific key that is hard-coded within (e.g., burned into fuses of) the application processor. If the Mask ROM can verify the read-only portion of the system firmware using the unique, hardware-specific key, the application processor will execute the read-only system firmware. Reliance on a Mask ROM to verify system firmware may prevent users from installing "unofficial" third-party or user-customized firmware that may not be signed with, and therefore, unverifiable using, the unique, hardware-specific key.

As a condition to executing the read-writeable portion of the system firmware, the read-only portion verifies that the read-writeable portion was signed, during compilation, with an "official" root key. The computing system may store the root key in the write-protected portion of the system memory. Under the assumption that the write-protected portion of the system memory is never corrupted, the application processor loads and executes the read-writable portion of the system firmware in response to determining that the read-writeable portion was signed with the root key.

In a similar way, in instances when the computing system is executing within a recovery mode, the read-only portion of the system firmware preserves system integrity by verifying that the recovery firmware was signed with the root key before executing the recovery firmware. By maintaining the assumption that the write-protected portion of the system memory is uncorrupted, the application processor loads and executes recovery firmware in response to determining that the recovery firmware was signed with the root key. If the recovery firmware cannot produce the recovery key, the computing system refrains from executing recovery firmware until an official version of recovery firmware that can produce the recovery key is installed and executed.

While some computing systems can prevent execution of unverifiable system firmware and recovery firmware in this way, this verified boot process inhibits usability, customization, and user control. Hardware-specific and "official" root keys may only be discoverable to authorized developers. Furthermore, security and integrity of the computing system depends on hardware-specific keys as well as implicit trust that the write-protected portion of system memory can protect "official" root keys. However, the official root keys can be compromised by sophisticated users who have physical access to the system memory or who otherwise find ways to compromise the write-protected portions of system memory. As such, not only is this type of verified boot less secure than it could be, legitimate users who are not authorized developers but who wish to execute third-party or custom firmware may be prevented from doing so, thereby unnecessarily limiting usability, customization, and user control of the computing system.

To promote customization and user control over firmware, without sacrificing security and integrity, a computing system is described that relies on a security processor and an application processor configured to verify system firmware and recovery firmware without relying on a manufacture's proprietary verification process, hardware-specific keys, or inherent write-protection features of system memory. Instead, the security processor verifies firmware based in part on firmware management parameters that define a process, including a degree of thoroughness, for verifying the firmware and the recovery firmware independent of an integrated circuit manufacturer's Mask ROM (read-only-memory) verification process, e.g., involving hardware-specific keys. As one example, the firmware management parameters may specify performing partial or probabilistic verification, complete or full verification, or no verification at all.

After verifying the system firmware's header signature and/or body signature, the security processor generates hash (e.g., SHA-256) values associated with respective blocks of the system firmware that are stored in system memory. The security processor compares the generated hash values to expected hash values that the security processor derives from read-only portions of the firmware body.

Because recovery firmware typically supports low-level drivers and a user interface that are not supported by system firmware, recovery firmware is generally larger in size than system firmware. As such, the security processor may rely on a higher-performance application processor to verify the recovery firmware. After verifying the recovery firmware's header and/or body signature(s), the application processor generates hash values associated with respective blocks of the recovery firmware that are stored in system memory. The application processor may generate and store *(e.g.,* as a background task performed by the operating system) the hash values for the recovery firmware automatically, e.g., following an initial successful boot up and execution of the system firmware.

The application processor compares the generated hash values to expected hash values that the application processor derives from read-only portions of the firmware body. If the expected and generated hash values produce a mismatch, the application processor notifies the security processor that the recovery firmware has failed verification and refrains from executing the recovery firmware. If the expected and generated hash values of the recovery firmware match, the application processor executes the recovery firmware.

In response to the recovery firmware failing a check by the application processor, the security processor may attempt to verify the recovery firmware according to the firmware management parameters. The security processor may partially verify the recovery firmware by checking only some of the generated hash values against expected hash values. Alternatively, the security processor can perform full verification and check the generated hash values against the expected hash values or perform no verification at all, bypassing the block check altogether.

In this way, the computing system can verify firmware and recovery firmware independent of an integrated circuit manufacturer's Mask ROM verification process, and without relying on hardware-specific keys. The computing system instead relies on a security processor to ensure that system firmware is signed appropriately and consistent with previously executed version, or if different, produces verification results (e.g., generated hash values) that are consistent with expected results embedded in the firmware, at compile time. In this way, the computing system may improve usability, customization, and user control over the firmware and recovery firmware that is executed within the computing system. Rather than be beholden to official firmware versions or predetermined hardware keys, an example computing system can securely execute custom or third-party firmware, without sacrificing system integrity.

By decoupling verification of firmware from knowledge of processor-specific, hardware keys, the techniques of this disclosure may enable computing systems to execute a greater variety of firmware and recovery firmware programs. A firmware developer no longer requires intimate product knowledge of, and reliance on, hardware-specific verification keys, which may be controlled by hardware manufacturers that may or may not be willing to coordinate with a firmware developer.

In addition, the techniques of this disclosure may enable computing systems to defend against a broader or different range of attacks, than what the computing system may have been exposed to previously. For example, previous systems relied on write protection of system memory and the only way an attacker could override the system memory would be through physical access to the computing system, including the memory chip or motherboard. This is called an "evil maid" attack, referencing the scenario where someone leaves a device unsupervised for a long period of time (e.g., in the presence of an attacker posing as a hotel maid to gain access to the device). However, some computing systems must defend against additional types of attacks, for example, by users who may themselves be authorized users with prolonged access to the device. For example, some schools issue computing devices to students with strict policies related to their use. Schools use enterprise policies to limit what students can do on these devices, in some cases due to legislative requirements. Some students may not like those limits, and may therefore attempt to circumvent the enterprise policies. Students have access to the devices for long periods of time, making reliance on write-protection to enforce the policy limits may be unrealistic. Other government entities or private corporations may have gaps in their own physical security which may allow an attacker to have physical control of a device for long enough to propagate an evil maid attack.

In both cases, a device owner may want to detect an attack and limit the device functionality in the event of the attack. The limitation may take a range of forms such as: refusing to decrypt user data on disk, refusing to provide previously stored credentials to websites or wireless access points, or refusing to boot at all. Owners may also have varying tolerance for the impact of additional protection on boot speed. Normal users may prefer a faster boot at the expense of somewhat-reduced security, much like how some users may use short and easily guessed passwords. Corporate users may prefer a more secure boot even if the security increases boot time by several seconds.

In another scenario, attackers may return a device back to a store after modifying the firmware (e.g., embedding malicious code into the device). The store should ensure that the firmware on the device has not been modified before reselling the device to a new customer. Similarly, devices can be returned to schools, governments, and corporations. Existing processes to verify firmware for so-called "in-store returns" can be slow, manual, and require a second device.

For each of the above scenarios, the techniques of this disclosure can enable stores, schools, corporations, and the like to defend against these broader or different range of attacks, by relying on the computing systems to automatically verify the firmware and recovery firmware, prior to executing the firmware or recovery firmware. This way, the true owners of the devices, as opposed to authorized users, can ensure the integrity of the computing systems they control, without having to manually verify the system's integrity.

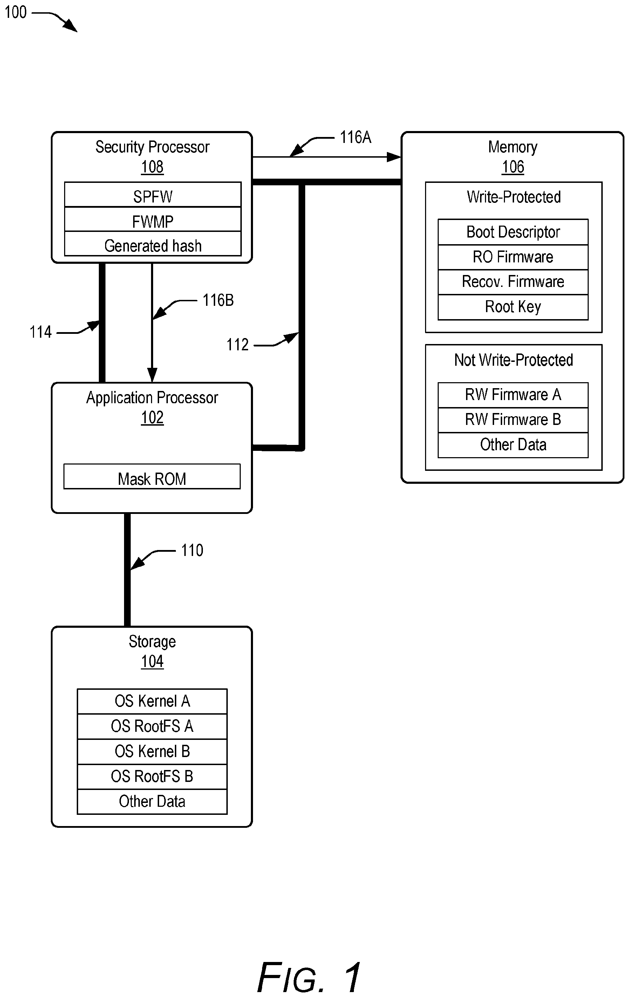

FIG. 1 is a conceptual diagram illustrating an example computing system 100 configured to perform secure verification of recovery firmware. The computing system 100 may form part of any type of mobile or non-mobile computing system. In a mobile computing system, the computing system 100 may represent one or more components of mobile phones, laptop computers, wearable devices (e.g., watches, eyeglasses, headphones, clothing), tablets, automotive/vehicular devices, portable gaming devices, electronic reader devices, and remote-control devices. In a mobile computing system, the computing system 100 may represent one or more components of servers, network devices (e.g., routers, switches, firewalls), desktop computers, television devices, entertainment set-top devices, thermostat devices, garage door opener devices, other home devices or appliances, tabletop assistant devices, speaker devices, non-portable gaming devices, and business conferencing equipment.

The computing system 100 may be part of a system-on-chip (SoC). For example, the computing system 100 may be a processing component of a mobile phone that replaces a traditional central processing unit (CPU) or central controller processing architecture. Rather than cause the mobile phone to suffer from CPU performance bottlenecks, the distributive processing architecture of the computing system 100 may enable the mobile phone to offload work that would otherwise need to be performed by a single CPU.

The computing system 100 of FIG. 1 includes an application processor 102, storage 104, memory 106, and a security processor 108. These and other components of the computing system 100 are communicatively coupled in various ways through buses 110, 112, and 114 and control links 116A and 116B. The computing system 100 may include additional or fewer components, buses, or links than what is shown in FIG. 1.

The computing system 100 includes buses 110, 112, and 114. The application processor 102 communicates with a controller of the storage 104 by exchanging data over a storage bus 110, to enable the application processor 102 to read from, or write to, the storage 104. In a similar way, the application processor 102 and the security processor 104 can each communicate with a controller of the memory 106 by exchanging data over a memory bus 112, to enable each of the security processor 108 and the application processor 102 to read from, or write to, the memory 106. Further, the security processor 108 and the application processor 102 can communicate directly by exchanging data over a host bus 114. The application processor 102 is configured to execute software, including firmware, kernel programs, operating system software, applications that execute within the operating system, and the like.

The security processor 108 includes control links 116A and 116B for facilitating control over the application processor 102 and the memory 106. The security processor 108 can control a write-protection feature of the memory 106 by outputting a control signal over control link 116A. In some cases, the security processor 108 can monitor the write-protection feature, for example, if an attacker tries to break the control link 116A. By outputting a control signal over control link 116B, the security processor 108 can place the application processor in reset or release the application processor 102 from reset. For example, the security processor 108 may hold the application processor in a reset state until firmware or recovery firmware can be verified at which time the security processor releases the application processor 102 from the reset state to subsequently execute the verified firmware or recovery firmware.

The buses 110, 112, and 114 and the control links 116A and 116B, which are shown in FIG. 1 are just some examples of the interconnections that the computing system 100 may include between the application processor 102, the storage 104, the memory 106, and the security processor 108. In other examples of the computing system 100, additional or fewer interfaces, links, and connections between the components of the computing system 100 may be used. Each of the buses 110, 112, and 114 and the control links 116A and 116B can include any one or combination of different bus structures, such as memory bus structures, peripheral bus structures, universal serial bus structures, processors or local bus structures that facilitate intercomponent communications any of a variety of bus architectures.

The storage 104 is configured to provide computing system 100 with persistent storage of executable instructions *(e.g.,* firmware, recovery firmware, software, applications, modules, programs, functions) and data *(e.g.,* user data, operational data) to support execution of the executable instructions. A controller of the storage 104 communicates on the storage bus 110, for example, to read or write data to the storage 104 at the command of the application processor 102. The storage 104 in the example of FIG. 1 includes two different copies (A and B) of an operating system kernel and an operating system file system, as well as other data needed to support installation and execution of the operating system kernel and the operating system file system.

Examples of the storage 104 include volatile memory and non-volatile memory, fixed and removable media devices, and any suitable memory device or electronic data storage that maintains executable instructions and supporting data. The storage 104 can include various implementations of random-access memory (RAM), read only memory (ROM), flash memory, and other types of storage memory in various memory device configurations. The storage 104 excludes propagating signals. The storage 104 may be a solid-state drive (SSD) or a hard disk drive (HDD).

The memory 106 represents a secure memory device, apart from the storage 104, that is a system memory *(e.g.,* non-volatile) configured to store data needed for performing secure boot and firmware / recovery firmware verification techniques. The memory may be a flash memory chip configured to communicate with the security processor 108 and the application processor 102 on the memory bus 112, which may be a serial peripheral interface (SPI) bus, and in which case, the memory 106 may be a SPI flash chip. Other types of non-volatile memory may be used for the memory 106, in other examples of the computing system 100.

The memory 106 includes a write-protected area as well as an unprotected, or "not-write-protected" area. In the write-protected area, the memory 106 includes a boot descriptor, a read-only portion of system firmware, recovery firmware, and a root key (as well as potentially other information such as a recovery key for signing the recovery firmware). In the unprotected area, the memory 106 includes two different copies of a read-writable portion of the firmware, as well as other data.

Maintaining firmware and recovery firmware may occupy large areas of the memory 106. The memory 106 may be divided into "blocks". It may be desirable for large areas of the memory 106 to be broken into multiple blocks. A firmware image can span multiple blocks. The security processor 108 may maintain firmware and recovery firmware at the memory 106 including, embedding in the body of the firmware and recovery firmware, an expected hash for each block of firmware and recovery firmware, that the security processor 108 can in-turn verify against a respective, generated hash for that block. In some cases, depending on whether performing full verification or not, when firmware or recovery firmware includes a plurality of blocks, the security processor 108 and/or the application processor 102 may generate a hash value for each or only a subset of the plurality of blocks.

A controller of the memory 106 can modify or delete data stored in the unprotected area of the memory 106. However, the controller cannot modify or delete data stored in the protected area of the memory while write-protection for the memory 106 is enabled. The memory 106 may include a physical feature to disable write-protection, such as a physical button, a physical pin, or a physical switch. The memory 106 may include an electronic interface to disable write-protection, such as a special programming interface, and the like. The security processor 108 can use the control link 116A between the security processor 108 and the memory 106 to send a signal that disables write-protection of the memory 106, for example, to allow the computing system 100 to install a new version of the read-only portion of the firmware.

The read-only portion of the system firmware stored at the memory 106 may include a body section and a header section. The header section can include information such as:
- An identifying byte sequence *(e.g.,* "magic number"), so that the firmware executing in the security processor 108 can identify the header from amongst other blocks of the memory 106 and enabling the header and firmware to be stored at one of several different possible addresses.
- A version number to associate the firmware with a specific device-model and to differentiate the system firmware from other versions intended to execute on other device models.
- A header signature applied to the header section using a public half of the verification key *(e.g.,* stored in the security processor firmware). The private half may be controlled at a remote entity, such as a with a hardware manufacturer, operating system developer, or other entity that works to ensure the computing system 100 only executes verifiable firmware. The private half may be stored in the security processor firmware.
- A verification subkey that the security processor 108 uses to verify the body section of the system firmware. The private half may be controlled at a remote entity, such as a with a hardware manufacturer, operating system developer, or other entity that works to ensure the computing system 100 only executes verifiable firmware. The private half may be stored in the security processor firmware.

The body section of the firmware image may include:
- A body version number that is incremented to differentiate the system firmware from other versions.
- A body signature applied to the body section using the verification subkey *(e.g.,* stored in the header section of the system firmware). The private half may be controlled at a remote entity, such as a with a hardware manufacturer, operating sytem developer, or other entity that works to ensure the computing system 100 only executes verifiable firmware.
- The expected values for control registers of the memory 106 that control what portion of the memory 106 that is write-protected when write-protection of the memory 106 is enabled.
- A table of expected hash values, with each entry corresponding to a different block of the memory 106 where a portion of firmware or recovery firmware is stored.
- A quantity of entries in the table.

Each entry in the table of expected hash values contained in the body section of firmware may specify:
- An address (or offset) in the memory 106 of the block.
- A size of the block *(e.g.,* in bytes).
- A weighting assigned to the block for use in verification. The weighting can be expressed as a fixed-point value, a logarithmic value, or other type of parameter. A maximum weighting may cause the block to always be verified in a probabilistic verification scheme. A minimum weighting may cause the block to never be verified in the probabilistic verification scheme. A weighting between the maximum and the minimum weightings will cause the block to be verified more often or less often, depending on whether the weighting is assigned value nearer the maximum weighting or nearer the minimum weighting.
- An expected hash *(e.g.,* SHA-256) of the portion of the firmware or recovery firmware that is stored in the block.

The application processor 102 is a main processing complex of the computing system 100 and the security processor 108 is a specialized processing unit of the computing system 100. Whereas the application processor 102 is primarily configured to execute instructions *(e.g.,* firmware, recovery firmware, kernel software, operating system software) for causing the computing system 100 to perform various operations, the security processor 108 is a support processor configured to perform security and verification operations. For example, in cases where the computing system 100 is a SoC in a mobile computer *(e.g.,* a mobile phone), the application processor 102 may execute instructions associated with an operating system and applications executing in an operating environment provided by the operating system. The security processor 108 may interact with the application processor 102 to manage a secure boot of the operating system and may perform verification of the firmware prior to the application processor 102 executing the firmware, or may verify the recovery firmware before the application processor 102 executes the recovery firmware in cases when the computing system 100 enters a recovery mode.

The application processor 102 and the security processor 108 may each include any combination of one or more controllers, microcontrollers, processors, microprocessors, hardware processors, hardware processing units, digital-signal-processors, graphics processors, graphics processing units, and the like. The application processor 102 and the security processor 108 may each be an integrated processor and memory subsystem (e.g., implemented as a SoC), which processes computer-executable instructions to control operations of the computing system 100. In some examples, the computing system 100 can be implemented with any one, or a combination of, hardware or fixed logic circuitry that is implemented in connection with processing and control circuits, which are generally identified as the application processor 102 and the security processor 108.

In an area of internal, non-volatile memory of the security processor 108, the security processor maintains firmware management parameters (FWMP), security processor firmware (SPFW), generated hash values, and other data. The security processor 108 verifies the security processor firmware (e.g., referred to in some systems as "Cr50") using an internal verification process before executing the security processor firmware.

The firmware management parameters represent configuration parameters that are set by the application processor 102. In some examples, the computing system 100 may require a password for the application processor 102 to change the firmware management parameters. In some examples, the password might be deleted or "forgotten" by the computing system 100 after an initial setup of the computing system 100, thereby causing the firmware management parameters to be static or written at a single time.

The firmware management parameters may include various security-related settings, including whether an operating system developer mode is enabled, whether a security chip firmware debugging mode is enabled, and the like. To enable firmware and recovery firmware verification, the firmware management parameters may include one or more other options or security-related settings, including an option to force "full verification" on each boot of the computing system 100 rather than "probabilistic verification" or "partial verification" or "no verification" (e.g., an option to disable verification entirely). Details about various verification modes, including full verification and probabilistic verification are described in reference to the other FIGS.

In some examples, the security processor 108 may support handling more options or settings through the firmware management parameters. For example, the firmware management parameters may include additional options for enabling enterprise and developer flexibility to trade-off security for complexity and usability in the verification process. For instance, rather than including just an option for choosing full verification, probabilistic verification, or no verification, the firmware management parameters may include options for a user or security administrator to adjust the weighting and therefore the odds to checking a particular block during probabilistic verification.

In some examples, the firmware management parameters may provide for further configuration of the security processor 108 *(e.g.,* setting to enable enterprises and developers more flexibility to trade off security and usability). For example, one additional setting could be a modifier to an assigned weighting attached to a particular block of firmware or recovery firmware to adjust the likelihood that the block will be checked during a partial or probabilistic verification. Other firmware management parameters may be a setting to require the security processor 108 to check for model-specific verification data *(e.g.,* in a header section of the firmware), optionally check the model-specific verification data if present and ignore the check if not present, or ignore the model-specific verification check altogether *(e.g.,* may be useful for developers).

The security processor 108 may maintain verification status information in the internal, non-volatile memory of the security processor 108 that the security processor 108 and/or the application processor 102 may access to perform firmware or recovery firmware verification. For example, the security processor 108 may have one or more Platform Configuration Registers that can be increased to be updated to a new state but not decreased (without removing power). As one example, the security processor may maintain verification status information including:
- A "generated hash" representing a value output from a secure hash function applied *(e.g.,* by the application processor 102 or the security processor 108) to one or more blocks of firmware or recovery firmware.
- A status indicator of whether the firmware or the recovery firmware was verifiable or not verifiable using the generated hash.

As indicated above, within the security processor firmware, the security processor 108 may maintain a verification key for verifying the header signature applied to the header section of the system firmware. For example, from a header section of the security processor firmware, the security processor 108 can determine the verification key (or hash thereof to save storage) for verifying the header signature applied to the system firmware during compilation *(e.g.,* the private half of the system firmware verification key being known to a compiler and applied to the system firmware during compilation). The security processor 108 may initially check the header signature applied to system firmware against the verification key stored in the security processor firmware *(e.g.,* embedded in a header section of Cr50) before continuing to verify the body of the system firmware. The security processor 108 may subsequently check the body signature applied to system firmware against the verification subkey stored in the body section of the system firmware before continuing to verify the system firmware.

The application processor 102, the security processor 108, and the memory 106 exchange data on the host bus 114 and the memory bus 112 to verify the firmware and the recovery firmware that has been loaded into the memory 106. The application processor 102 can initialize the firmware management parameters maintained by the security processor 108, and according to the firmware management parameters, the security processor 108 can verify the firmware including generating a hash of the firmware and comparing the generated hash to an expected hash the security processor 108 extracts from a body section of the firmware stored in the memory 106. The security processor 108 can verify the recovery firmware including generating a hash of the recovery firmware (or relying on the application processor 102 to generate the hash of the recovery firmware) and comparing the generated hash to an expected hash the security processor 108 extracts from a body section of the recovery firmware stored in the memory 106.

In operation, the security processor 108 may initially verify the header signature of the firmware using the system firmware verification key (or hash thereof) maintained by the security processor 108. If the security processor 108 determines the signature of header is incorrect, the security processor 108 may shut-down the computing system 100 to prevent the computing system 100 from loading and executing incompatible or corrupted system firmware. Assuming the signature of the header system firmware is verifiable using the verification key, the security processor 108 may determine whether the body signature applied to the body section of the system firmware was generated using the verification subkey. If the security processor 108 determines the signature of the body section is incorrect, the security processor 108 may shut-down the computing system 100 to prevent the computing system 100 from loading and executing incompatible or corrupted system firmware.

Assuming the signature of the body section is verifiable using the verification subkey, the security processor 108 determines expected hash values of blocks of system firmware or recovery firmware that are loaded in the memory 106, in accordance with the firmware management parameters. For example, during a full check of the system firmware, and from the header or the body of the system firmware, the security processor 108 may identify expected hash values for each block of the system firmware that is stored in the memory 106. The expected hash values can remain fixed attributes of the system firmware and can be determined ahead of time, *e.g.*, at compile time. As a condition to executing the system firmware and recovery firmware, the security processor 108 compares generated hash values of the blocks of system firmware and recovery firmware that are currently stored in the memory 106, to the predetermined, expected hash values embedded in the system firmware and recovery firmware.

The security processor 108 may apply hash functions directly to the blocks of system firmware loaded in the memory 106, or the security processor 108 may rely on the application processor 102 to apply the hash functions as a background or operating system task. In either case, these generated hash values are compared to the expected hash values. If the security processor 108 identifies a discrepancy between the hashes, the security processor 108 may notify the application processor 102 of the failed verification to prevent the application processor 102 from executing potentially corrupted or malicious firmware or recovery firmware.

During a subsequent boot process, the security processor 108 may repeat the above verification process by refreshing the generated hashes of the system firmware, replacing first generated hashes of the system firmware with second generated hashes of the system firmware. For example, if system firmware previously failed verification, the security processor may regenerate the hashes associated with the system firmware to enable a subsequent attempt at verification. Responsive to determining the expected hashes of the system firmware do not match the second hashes, the security processor 108 may direct the application processor 102 to enter a recovery mode, or otherwise refrain from executing the system firmware.

In some examples, the security processor 108 may control an output component, such as a light emitting diode (LED) or a speaker, of the computing system 100 to indicate when firmware or recovery firmware fails verification. It could also be used by the security processor 108 at other times, for example to indicate that a two-factor authentication is requested. The output component may be a dedicated output component for use by the security processor 108. In other cases, the output component may have a dual function (e.g., such as a power or charging identifier or a keyboard or display backlight). The security processor 108 may control the output component to indicate a failed verification, a successful verification, or other status. Such an output component may have a dual purpose (such as a power or charging LED, or the keyboard or display backlight) or may be purposely integrated into the computing system 100 to provide status of firmware and recovery firmware verification. A typical control scheme for the output component may include sending messages from the application processor 102, to the security processor 108, to control the output component. In other examples, the security processor 108 could have a pulse-width-modulation (PWM) capture unit on a pin to measure an output of the application processor 102, and the security processor 108 could have its own PWM unit to replicate the output to the output component. In other examples, the security processor 108 could have internal switch controllable by the application processor 102 to control the output component.

An attacker with physical access to the computing system 100 could remove the output component or block light from the output component. By controlling the output component during the verification processes, the security processor 108 makes such an attack more difficult by enabling the output component very early during the boot or login process, similar to how a check-engine light in an automobile is displayed immediately for several second during start-up. An attacker could wire the output component to another processor in the computing system 100 to try to duplicate that behavior, but that involves a permanent, possibly noticeable hardware modification.

In some cases, the security processor 108 may include a single open-drain pin connected to a write-protection signal. This is connected through a resistor to enable a debugger to override that signal during manufacturing. Removing this resistor is a moderately feasible way for an attacker to prevent both the security processor 108 from being able to drive the write-protection signal and the from being able to detect the current state of the write-protection signal. The security processor 108 may include a second pin connected to the exact same net as the first write-protected pin. The additional pin could be concealed beneath inner layers of the motherboard to make disrupting the signal more difficult. The security processor 108 may monitor that signal to measure the true state of the first write-protection pin.

An attacker would need to power down the computing system 100 to prevent the security processor 108 from detecting a state change to the write-protection pin. But on boot, the security processor 108 may rescan the system memory 106 and identify changes. An attacker could replace the system memory 106 with a more sophisticated circuit which allows more control of an SPI bus, and stack the new memory 106 on top of that circuit. That is a much more difficult attack, though, and leaves physical evidence.

Although described primarily for verifying firmware executable on an application processor, the techniques for securely verifying recovery firmware apply to other processors as well. For example, in addition to the application processor 102 and the security processor 108, the computing system 100 may include other processors with firmware, such as an embedded controller (EC) fingerprint sensor (FPMCU), other hardware unit, hardware accelerator unit, or the like. If the security processor 108 can access the firmware of another processor, the security processor 108 can also verify the firmware and recovery firmware in a way that the security processor 108 verifies the firmware of the application processor 102. As such, other processors may benefit from the flexibility and security that secure verification provides.

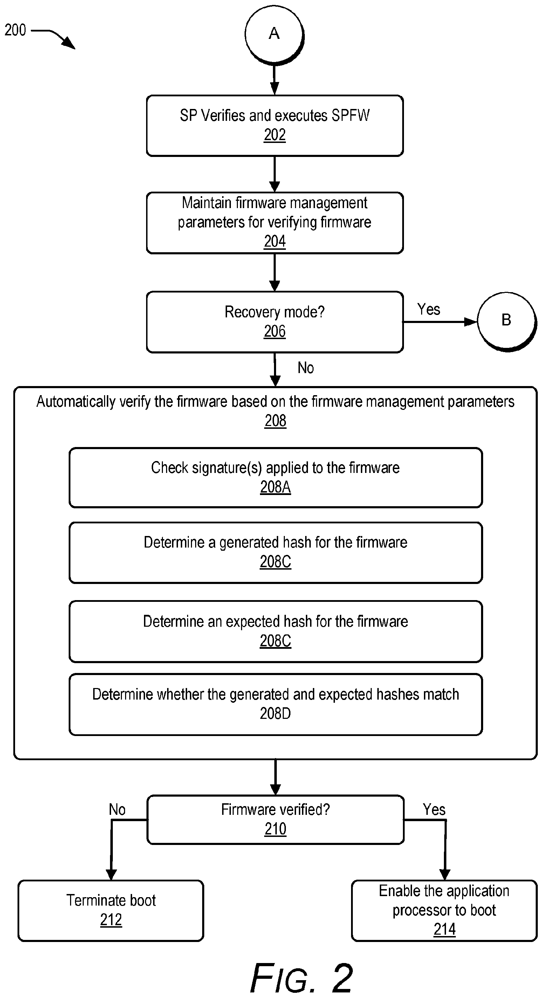

FIG. 2 is a flow-chart illustrating example operations of a security processor configured to verify firmware. FIG. 2B is a flow-chart illustrating example operations of a security processor configured to verify recovery firmware. The operations 200 include steps 202-214. The operations 200 may be performed in a different order or with additional or fewer operations than that shown in FIG. 2. The security processor 108 may perform the operations 200 to verify the system firmware maintained in the memory 106.

In FIG. 2, the security processor 108 may execute the operations 200 during each power-on or reset of the computing system 100. The security processor 108 may execute the operations 200 in response to transitioning out of a sleep mode. The security processor 108 may execute the operations 200 in response to a reset of the security processor 108 *(e.g.,* if a user provides a particular key input combination that triggers the security processor 108 to reset).

At 202, when the security processor 108 powers-on, wakes, or resets, the security processor verifies, loads, and executes its own security processor firmware. At 204, the security processor 108 maintains firmware management parameters including options for verifying firmware. In other words, the security processor 108 may be configured to verify system firmware or recovery firmware, based on information inferred from the firmware management parameters, for instance, by performing "full verification" of the recovery firmware on each boot of the computing system 100, "probabilistic verification", or no verification of the recovery firmware. The security processor 108 can store status information and flags as firmware management parameters that the security processor 108 uses to determine the level of verification *(e.g.,* full verification, partial or probabilistic verification, or no verification) as well as to determine results of previous verification processes performed by the application processor 102 and/or the security processor 108.

The firmware management parameters may be initialized by the application processor 102 at initial boot of the computing system 100. When performing full verification of recovery firmware, the security processor 108 checks the recovery firmware in its entirety, including checking a generated hash for each block of the firmware against a respective, expected hash recorded in a body section of the firmware. When performing no verification of recovery firmware, the security processor 108 refrains from generating any hashes for the firmware *(e.g.,* useful for debugging).

Some blocks of the firmware may not affect functionality of the computing system 100. Skipping certain blocks on a boot or during a recovery may permit the computing system 100 to operate in a wider range of scenarios, without greatly reducing the security the computing system 100. As such, a table of weights in the firmware may specify a weighting factor associated with each firmware block and used to determine whether the block can be skipped.

In some examples, some blocks may have less chance of being used when recovering from a deep sleep or when entering a low-power suspend mode wherein the application processor and/or the security processor may shut down. There are some blocks used by a normal boot, which do not affect resume from deep sleep or entering a low-power suspend mode, such as the Root Key or other portions of the firmware. Skipping these blocks on a resume can improve resume time without greatly reducing security.

At 206, the security processor determines whether the computing system 100 is in a recovery mode or whether to assume a normal, non-recovery mode. For example, the security processor 108 can check whether a user of the computing system 100 is manually selecting recovery mode in response to detecting a particular input at a keyboard or other input component of the computing system 100. In other cases, the security processor 108 may enter recovery mode and begin verification of recovery firmware, in response receiving a request from the application processor 102 to verify the recovery firmware. The application processor 102 may check the recovery firmware prior to execution. In response to detecting a mismatch between generated and expected hashes of the recovery firmware, the application processor 102 may communicate (e.g., via the host bust 114) to the security processor 108 a command to enter recovery mode.

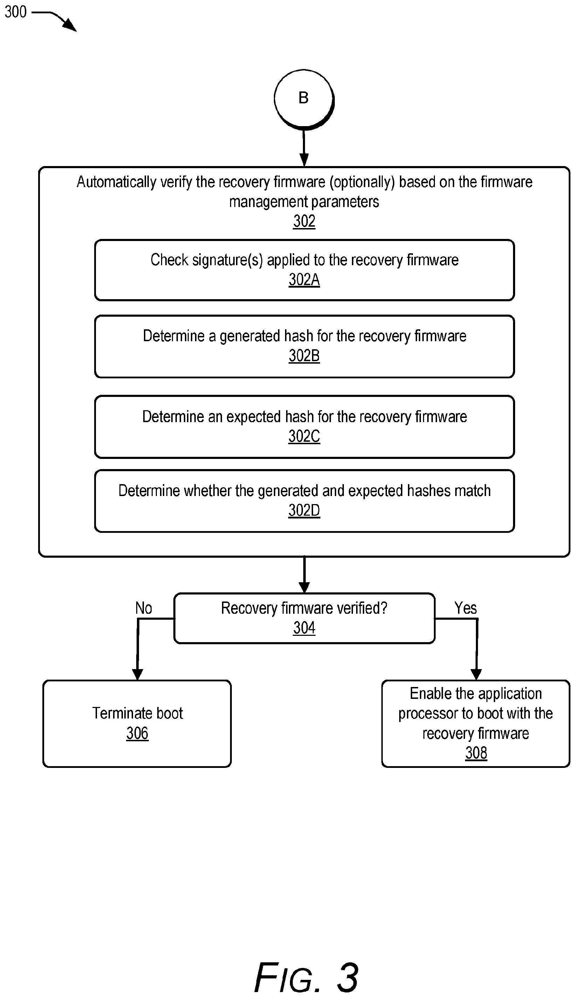

In response to determining to enter a recovery mode, the security processor 108 performs operations 300 shown in FIG. 3. Alternatively, in response to determining to enter non-recovery mode, the security processor continues by performing step 208 to automatically verify the system firmware based on firmware management parameters maintained by the security processor 108.

At 208A, the security processor 108 checks the signatures applied to the system firmware against the system firmware verification key and subkey. For example, the security processor 108 can use the verification key maintained in a header section of the security processor firmware (or maintained elsewhere within the security processor 108) to verify the header signature of the firmware. The private half of the system verification key can be maintained by an operating system developer or the manufacturer of the computing system 100 and provided to official compilers used to compile and sign the system firmware that is intended to execute on the application processor 102.

In response to verifying the header signature, the security processor 108 can use the verification subkey from the header section of the system firmware to verify the body signature applied to the system firmware. The private half of the system verification subkey can be maintained by the operating system developer or the manufacturer of the computing system 100 and provided to official compilers used to compile and sign the body of the system firmware that is intended to execute on the application processor 102.

If the security processor 108 determines that the system firmware was not signed using the appropriate verification key and verification subkey, the security processor 108 fails the system firmware verification check and goes to step 210. Alternatively, the security processor 108 goes on to verify the firmware in steps 208B through 208D in response to verifying the signature applied to the system firmware.

Checking signatures as part of the firmware verification process may be more taxing on the resources of the security processor 108 than simply checking hashes in steps 208C through 208D. The security processor 108 may save intermediate values (e.g., signature hashes) generated in step 208 so that the security processor 108 can perform quicker signature checks the next time the security processor executes the operations 200.

The security processor 108 may provide "rollback protection." By preserving a highest version number of verified recovery firmware that the security processor 108 has checked. The security processor 108 can output a notification to alert the computing system 100 when an older version with a lower version number than the highest version number is being checked. For example, if the header section of the firmware indicates version A, although the previous version checked by the security processor 108 was version B, the security processor may set a flag in its internal registers or otherwise signal to the application processor 102 a warning (e.g., for output via a user interface) that the firmware was "rolled-back" to a previous version.

Based on the firmware management parameters, the security processor 108 performs the steps 208B through 208D for each block of system firmware when doing full-verification, only some of the blocks of the system firmware when doing partial-verification or probabilistic-verification, and none of the blocks of the system firmware when the firmware management parameters indicate that verification can be skipped.

At 208B, the security processor 108 hashes the system firmware based on the firmware management parameters to determine a generated hash for the system firmware. For example, the security processor 108 may load one or more of the individual blocks of the system firmware from the memory 106 and apply a hash function to the blocks. The security processor may maintain a result of the hash function in a register or internal memory for subsequent comparisons against expected hash values.

At 208C the security processor 108 determines an expected hash for the system firmware. For example, the computing system 100 may require that the system firmware include a dedicated and discoverable area *(e.g.,* part of a body section) for recording an expected hash value of the blocks of the system firmware that are maintained in the memory 106. The expected hash value(s) embedded in the system firmware are typically sufficient for verifying recovery firmware, since the firmware and recovery firmware are typically built during a comprehensive build process that involves compiling the firmware and recovery firmware together as part of a firmware image. The security processor 108 can determine the expected hash by extracting a particular value, from a predetermined area of a body section of the firmware.

At 208D, the security processor 108 determines whether the expected hash and the generated hash match. If the hashes match, the security processor 108 verifies the firmware and updates status registers maintained by the security processor 108 to reflect that the firmware was verified. Likewise, if the hashes do not match, the security processor updates the status registers to indicate that the firmware was unverifiable.

At 210, the security processor determines whether the firmware was successfully verified. At 212, when firmware fails the verification check in step 208 and is not verified, the security processor 108 directs the computing system 100 to terminate boot-up and power-down. At 214, when firmware passes the verification check in step 208 and is verified, the security processor 108 directs the computing system 100 to continue the boot process by releasing the application processor 102 from reset and enabling the application processor 102 to execute the firmware.

FIG. 3 is a flow-chart illustrating example operations of a security processor configured to verify recovery firmware. The operations 300 include steps 302-308. The operations 300 may be performed in a different order or with additional or fewer operations than that shown in FIG. 3. The security processor 108 may perform the operations 300 to verify the recovery firmware maintained in the memory 106.

In FIG. 3, the security processor 108 may execute the operations 300 in response to the security processor determining, at step 206 of operations 200, that the computing system 100 is entering a recovery mode.

Computing system 100 can enter recovery mode in various ways. For example, the computing system 100 can enter a recovery mode in response to the application processor 102 determining that a user is manually requesting entry into the recovery mode *(e.g.,* by detecting a particular key press on a keyboard of the computing system 100, by detecting a different signal from an input component of the computing system 100). The computing system 100 can enter recovery mode if, during execution of the read-only portion of the system firmware, the application processor 102 determines that the signature applied to a read-writable portion of the system firmware is incorrect. The read-only portion of the system firmware can check the signature using the root key stored in the write-protected portion of the memory 106.

Prior to entering the recovery mode, the operating system of the computing system 100 may have verified the recovery firmware, e.g., as a background task, and stored an expected hash for the recovery firmware in the memory 106. On a normal boot, the computing system 100 need not verify the recovery firmware because the recovery firmware will not be executed during the initial boot path. Unless being commanded from a user to enter recovery mode, the application processor 102 can boot all the way to the operating system without verifying the recovery firmware.

The operating system may verify the recovery firmware in the background during normal operation to prevent an attacker from disabling the recovery firmware, which can go unnoticed by the computing system 100, until a normal boot path failed. While an attacker may not necessarily be prevented from causing the computing system 100 to execute unverified code, at least having the operating system check the integrity of the recovery firmware in the background, can enable the computing system 100 to detect a potential attacker ahead of time, prior to a reboot. In some cases, a developer may be testing a new firmware version and may want to be notified or warned ahead of time that the computing system 100 is potentially executing bad, or unverified firmware. This may give the user a choice to not execute the recovery firmware or repair the firmware before the computing system 100 executes the untrusted recovery firmware.

The operating system or other service or thread executing at the application processor 102 can request the security processor 108 enter recovery mode to reverify recovery firmware for various reasons. The operating system or other service or thread communicate reverification requests by communicating with the security processor 108 via the host bus 112.

The application processor 102 is typically more powerful and faster than the security processor 108. As such, the faster processing speed, greater bandwidth, and power of the application processor 102 can be leveraged by the computing system 100 to initially verify the recovery firmware faster than the security processor 108 could.

During execution, the system firmware may maintain an expected hash of the recovery firmware in the system memory, as initially determined from the previous boot. A hash may provide a sufficient reference point for determining the integrity of the recovery firmware (e.g., whether the recovery firmware has changed since last used) because the recovery firmware and the system firmware (including the read-only portion) are built together, at the same time. Upon determining that the computing system 100 is entering recovery mode, the system firmware directs the application processor 102 to compare the expected hash of the recovery firmware to a hash the application processor generates of the recovery firmware that is loaded in the memory 106.

In response to determining that the expected and generated hashes match, the application processor 102 executes the recovery firmware. In response to determining that the recovery firmware has failed the check and that either the signature of the recovery firmware is bad, or the expected and generated hashes are a mismatch, the application processor 102 will request that the security processor 108 verify the recovery firmware to enable the computing system 100 to execute the recovery firmware and operate in the recovery mode.

At 302, in response to determining that the computing system 100 is entering the recovery mode at 206, the security processor 108 automatically verifies the recovery firmware, optionally, in accordance with the firmware management parameters used during verification of the system firmware. For example, the security processor 108 may default to performing a full verification of the recovery firmware, checking each block of the recovery firmware loaded in the memory 106. In other cases, some blocks of the recovery firmware may be less likely to cause an issue if corrupted and therefore, the security processor 108 may skip the bocks that are least likely to cause a catastrophic failure and perform a probabilistic or partial verification of the recovery firmware. The security processor 108 may determine whether to do a full or partial check of the recovery firmware, based on information in the firmware management parameters.

For probabilistic verification, each block may be assigned a weighting that is then compared to a threshold, dynamically generated during the verification process (e.g., during operations 300 or 200). The dynamically generated threshold may correspond to an output from a random number generator. If the assigned weighting exceeds the dynamic threshold for the block, the security processor 108 will execute steps 302A through 302D to automatically verify that block, following a similar process as that outlined above regarding steps 208A through 208D. If the assigned weighing does not exceed the dynamic threshold, the security processor 108 may skip that block and not consider whether an expected hash for that block matches a generated hash.

At 302A, the security processor 108 checks the signatures applied to the system firmware against the system firmware verification key and subkey. In response to verifying the header signature, the security processor 108 can use the verification subkey from the header section of the system firmware to verify the body signature applied to the system firmware. If the security processor 108 determines that the system firmware was not signed using the appropriate verification key and verification subkey, the security processor 108 fails the system firmware verification check and goes to step 304. Alternatively, the security processor 108 goes on to verify the recovery firmware in steps 302B through 302D in response to verifying the signature applied to the system firmware.

Typically, the security processor 108 performs the steps 302B through 302D for each block of recovery firmware, as a full verification may be necessary to maximize detection of any corrupted blocks of recovery firmware. However, the security processor 108 may be configured to execute a partial or no verification of the recovery firmware, if the firmware management parameters indicate no or only a partial verification. In such a case, the security processor 108 selectively performs the steps 302B through 302D against blocks of recovery firmware that are preassigned a weighting that when applied to a random number, cause the random number to satisfy a threshold.

At 302B, the security processor 108 hashes individual blocks of the recovery firmware and may maintain a result of the hash functions in a register or internal memory for subsequent comparisons against expected hash values. At 302C the security processor 108 determines a corresponding expected hash for the individual blocks of the recovery firmware as initially determined by the application processor during an initial check of the recovery firmware. At 302D, the security processor 108 determines whether the expected hash and the generated hashes match. If the hashes match, the security processor 108 verifies the recovery firmware and updates status registers maintained by the security processor 108 to reflect that the firmware was verified. Likewise, if the hashes do not match, the security processor updates the status registers to indicate that the recovery firmware was unverifiable.

At 304, the security processor determines whether the recovery firmware was successfully verified. At 306, when recovery firmware fails the verification check in step 304 and is not verified, the security processor 108 directs the computing system 100 to terminate boot-up and power-down. At 308, when the recovery firmware passes the verification check in step 304 and is verified, the security processor 108 directs the computing system 100 to continue the recovery process by releasing the application processor 102 from reset and enabling the application processor 102 to execute the recovery firmware.

As previously indicated, write-protection for the memory 106 can be controlled by the security processor 108 via the control link 116A. It is possible that an attacker of the computing system 100 could attempt to override the write-protection signal controlled by the security processor *108, e.g.,* by applying a voltage to a physical, write-protection feature on the memory 106, cutting a wire or breaking a link between the write-protection signal and the security processor 108. The security processor 108 can monitor whether the write-protection for the memory 106 has changed, and if so, set a flag or otherwise indicate that the write-protection of the memory 106 has changed and information stored at the memory 106 could be changing. For example, the security processor 108 may change a value in an internal register or internal memory being monitored by a component of the operating system executing at the application processor 102. The security processor 108 may therefore initiate a recovery process, including performing the operations 300 when the security processor 108 experiences a recovery condition.

The security processor 108 may skip the step 302 altogether, including sub steps 302A through 302D, for example when a firmware management parameter indicates that block checking is disabled. As such, a precondition for performing the operations 300 may include determining a whether block checking is disabled, full block checking is enabled, or probabilistic block checking is enabled. The security processor 108 may therefore execute the step 302, including the sub steps 302A through 302D, to adhere to the checking scheme defined in the firmware management parameters.

Assuming block checking is not disabled, the security processor 108 may load and check the recovery firmware. The security processor may perform a full check, e.g., performing the operations 204-210 for each block of the recovery firmware by comparing each block to an expected hash. The security processor 108 may perform a probabilistic check, e.g., performing the operations 204-210 for only some of the blocks. The security processor 108 can perform a probabilistic check by hashing and comparing for only the blocks of the recovery firmware that satisfy a threshold for checking or skipping blocks.

In some cases, the security processor 108 may perform firmware and firmware verification even in absence of receiving a request to do so. For example, the security processor 108 may be programmed to verify the firmware or recovery firmware (e.g., periodically, according to a schedule, or according to different conditions or rules) by automatically executing operations 200 or 300, without waiting for a signal from the application processor 102.

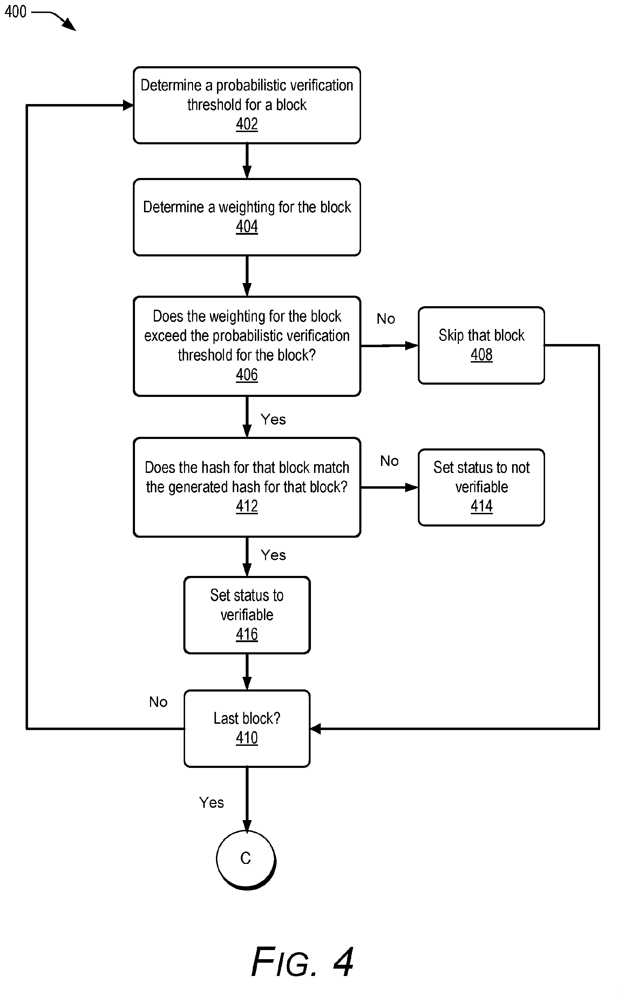

FIG. 4 is a flow-chart illustrating example operations of a security processor configured to perform probabilistic or partial verification of firmware or recovery firmware. The operations 400 include operations 402-416. The operations 400 may be performed in a different order or with additional or fewer operations than that shown in FIG. 4. The security processor 108 may perform the operations 400 to probabilistically verify the firmware or the recovery firmware maintained in the memory 106.

To increase speed and efficiency of firmware or recovery firmware verification, without sacrificing security, the security processor 108 may probabilistically verify or only partially verify, the firmware or recovery firmware. While, the security processor 108 can perform full-verification and check every block of firmware or recovery firmware, with probabilistic verification, the security processor 108 typically only checks a portion of the firmware or recovery firmware.

For example, the security processor 108 may rely on respective weightings that have been preassigned (e.g., in the firmware header) to each block of firmware or recovery firmware. The security processor 108 may dynamically generate a threshold for each block and compare the threshold to the preassigned weighting for that block as a condition for verifying the block. For example, the security processor 108 may execute a random generator that outputs a value between zero and one, for each block of firmware or recovery firmware. In response to determining the dynamic threshold being output from the random number generator exceeds the preassigned weighting (e.g., in this example, also a value between zero and one), the security processor 108 will skip the block and go on to check a subsequent block. In response to determining the dynamic threshold does not exceed the preassigned weighting, the security processor 108 will check the block *(e.g.,* by comparing the block's expected hash to the block's generated hash).

At 402, the security processor 108 determines a probabilistic verification threshold for a block. The threshold represents a value between a maximum weighting and a minimum weighting, that is assigned to the blocks of recovery firmware. The threshold may be fixed or dynamic, e.g., based on context or other conditions of the computing system 100. The security processor 108 may determine the threshold by analyzing firmware to derive the maximum and minimum weightings from amongst all entries in a table in the firmware's body section. The security processor 108 may use a random number generator to determine a dynamic threshold as any value greater than or equal to the maximum weighting and less than or equal to the minimum weighting.

At 404, the security processor determines a weighting for the block. For example, as mentioned above, a body section of firmware may specify a table of weights assigned to each block or other logical section of firmware or recovery firmware. Each respective weight may indicate a relative degree of importance for verification, as compared to other blocks. The weighting can be a fixed-point value, a logarithmic value, or other type of parameter that has a maximum and minimum value.

During probabilistic verification, a higher weighting may cause a block to be verified more frequently than a block with a lower weighting. Each block may be assigned a weighting when the firmware is generated, or may be adjusted, for example in a debugging mode where a developer may have access to the weightings via inputs to the application processor 102. In some examples (e.g., through a special programming channel), the weights can be adjusted so that different verification schemes can be executed by changing the weighting the firmware's body section.

At 406, the security processor 108 determines whether the weighing assigned to the block exceeds the probabilistic verification threshold. At 408, any block with a weighting that does not exceed the threshold is skipped, and at 410, the security processor 108 checks whether this is the last block being checked. If not the last block, the security processor returns to step 402 and if the block is the last block, the security processor finishes the probabilistic check at C.

If at 406 the security processor determines that the weighting assigned to the block exceeds the probabilistic verification threshold for the block, then at 412, the security processor 108 determines whether a hash generated for the block matches an expected hash for the block. The security processor exits operations 400 in response to determining at 414 that a bock's generated and recorded hash values do not match and sets a status register or otherwise signals to the application processor 102 that the firmware or recovery firmware is not verifiable. At 416, in response to determining that the generated hash for the block matches the expected hash, the security processor 108 sets the status register to indicate that the firmware or recovery firmware is verifiable. At 410, if after setting the status register to indicate that the firmware or recovery firmware is verifiable, the security processor 108 determines that the block is the last block to be checked, the security processor 108 signals the application processor 102 to indicate that the firmware or recovery firmware is verifiable

In some cases, the security processor 108 may vary the probabilistic verification threshold, or use different weightings assigned to the blocks of firmware or recovery firmware, depending on whether the security processor 108 is verifying the firmware, the recovery firmware, booting from a deep-sleep, or booting from a reset. For example, in some cases, the security processor 108 may check every block of recovery firmware during a recovery boot, and the weighting assigned to each block, specifying the chance of checking that block, may be the same for all other boot or resume operations.

There are some blocks used by a normal boot which may not affect recovery operation, such as blocks of the firmware or recovery firmware that include the Root Key. Skipping these blocks on a recovery boot may permit recovering from a wider range of scenarios, without reducing the security of a recovery operation. A verification data table maintained in the firmware could additionally specify the chance to check the block on a recovery boot, or a flag indicating the block is not used by recovery.

Once the application processor 102 executes recovery firmware, the application processor 102 could still check any blocks skipped by the security processor 108 and optionally display a warning to the user. This may be helpful in diagnosing a normal mode boot problem, without blocking recovery boot.

There are some blocks used by a normal boot which may not affect resume from deep sleep, such as the Root Key or portions of the read-only firmware that verify the read-writable portions of the firmware. Skipping these blocks on a resume may improve resume time, without reduction in security.

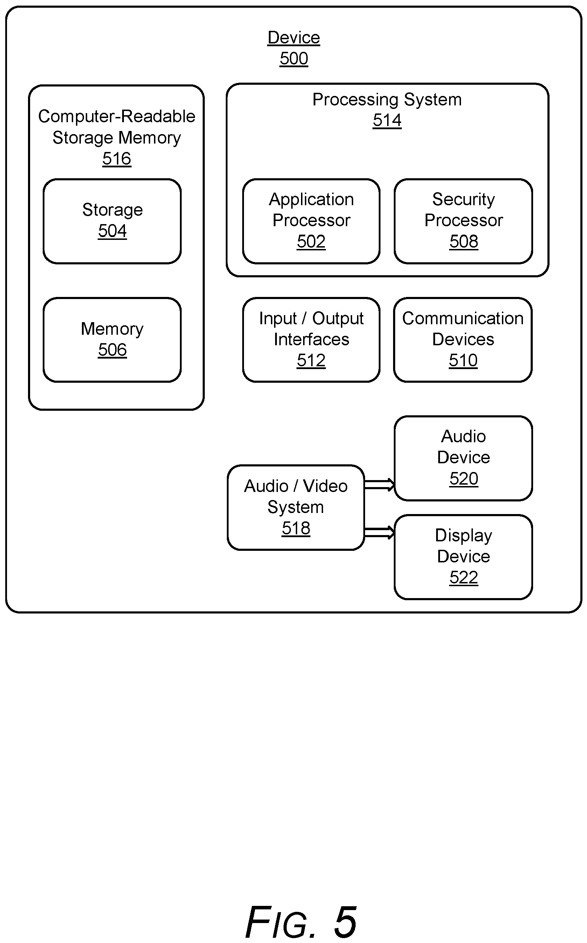

FIG. 5 is a conceptual diagram illustrating a computing device configured to perform secure verification of firmware and recovery firmware. FIG. 5 illustrates example computing device 500 which may be any type of computing device, client device, mobile phone, tablet, wearable, vehicle, communication, entertainment, gaming, media playback, and/or other type of device.

The computing device 500 includes communication devices 510 that enable wired and/or wireless communication of device data 506, such as data that is communicated between the devices in a WLAN, data that is being received, data scheduled for broadcast, data packets of the data, data that is synched between the devices, etc. The device data can include any type of communication data, as well as audio, video, and/or image data that is generated by applications executing on the device. The communication devices 510 can also include transceivers for cellular phone communication and/or for network data communication.

The computing device 500 also includes input / output (I/O) interfaces 512, such as data network interfaces that provide connection and/or communication links between the device, data networks (e.g., a mesh network, external network, etc.), and other devices. The I/O interfaces can be used to couple the device to any type of components, peripherals, and/or accessory devices. The I/O interfaces also include data input ports via which any type of data, media content, and/or inputs can be received, such as user inputs to the device, as well as any type of communication data, as well as audio, video, and/or image data received from any content and/or data source.

The computing device 500 also includes an audio and/or video system 518 that generates audio data for an audio device 520 and/or generates display data for a display device 522. The audio device 520 and/or the display device 522 include any devices that process, display, and/or otherwise render audio, video, display, and/or image data, such as the image content of a digital photo. In implementations, the audio device and/or the display device are integrated components of the example computing device 500. Alternatively, the audio device and/or the display device are external, peripheral components to the example device.

The computing device 500 includes a processing system 514 including an application processor 502 as an example of the processor 102, and a security processor 508 as an example of the security processor 108. Components of the processing system 514 may be implemented at least partially in hardware, such as with any type of microprocessors, controllers, and the like that process executable instructions. The processing system can include components of an integrated circuit, programmable logic device, a logic device formed using one or more semiconductors, and other implementations in silicon and/or hardware, such as a processor and memory system implemented as a system-on-chip (SoC). The device can be implemented with any one or combination of software, hardware, firmware, or fixed logic circuitry that may be implemented with processing and control circuits. The computing device 500 may further include any type of a system bus or other data and command transfer system that couples the various components within the device. A system bus can include any one or combination of different bus structures and architectures, as well as control and data lines.

The computing device 500 also includes computer-readable storage memory 516, such as data storage devices that can be accessed by a computing device, and that provide persistent storage of data and executable instructions (e.g., software applications, modules, programs, functions, and the like). The computer-readable storage memory described herein excludes propagating signals. Examples of computer-readable storage memory include volatile memory and non-volatile memory, fixed and removable media devices, and any suitable memory device or electronic data storage that maintains data for computing device access. The computer-readable storage memory can include various implementations of RAM, ROM, flash memory, and other types of storage memory in various memory device configurations.

The computer-readable storage memory 516 includes a storage component 504 as an example of the storage 104, and a memory component 506 as an example of the memory 106. The storage component 504 may store a kernel, root file system, or other operating system related software. The memory 506 may store firmware and recovery firmware for booting up the computing device 500 as a precondition to loading and executing the kernel, root file system, and other operating system related software.

The computing device 500 is configured to perform secure verification of firmware and recovery firmware stored at the memory 506. The security processor 508 compares generated hash values associated with the firmware and recovery firmware to expected hash values (e.g., stored in the memory 506). In cases where the generated and expected hash values match, the application processor 502 may direct the application processor to execute the verified firmware or recovery firmware. In cases where the generated and expected hash values do not match, however, the application processor 502 may refrain from executing the firmware or recovery firmware, the computing device 500 may shut down, or the application processor 502 may command the security processor 508 to re-verify the firmware or recovery firmware, as described above.

Consider some use cases for the computing device 500, which, for ease of description, is a laptop in the following scenario. A normal user may purchase the computing device 500 and log-in to the computing device 500 an initial time. If the user subscribes to a remote (e.g., two-factor) authentication service via a second device (e.g., a mobile phone), the second device can confirm the user is about to log into a fully verified laptop, or not, in response to remotely requiring the computing device 500 to perform firmware or recovery firmware verification. The user may control whether the service requires verification, for example, by enrolling in an option to "only let me log into devices which have fully verified firmware." This way, even if an attacker who enables developer mode can install a corrupted version of firmware or reset the user's security credentials on the computing device 500, when the user logs into the computing device 500 after the attack, the service will recognize the computing device 500 as a new device and undergo the two-factor authentication process.

In an enterprise enrolment process, the computing device 500 can perform the following steps to ensure device integrity using the described verification techniques. An enrolment server in charge of the enterprise enrolment process can query the security processor 508 to obtain a motherboard identifier (e.g., a BoardID) and verification results obtained by the security processor 508 (e.g., generated hash values, verification results).

If the generated hash values or verification results indicate that less than all the blocks of firmware or recovery firmware were verified, the enrolment server may direct the application processor 502 to reset and reboot by performing a full firmware verification. This ensures that only fully verified firmware is allowed to participate in an enrollment process.

In cases where the motherboard identifier is not an authorized production number, or a generated hash value is not an expected hash value stored at the enrolment server, the enrolment server may deny the computing device 500 enrolment onto the enterprise network (e.g., this could happen if a pre-production device is somehow shipped to a consumer).

In response to verifying the firmware, the enrolment server obtains user login credentials and performs two-factor authentication or some other authentication process to complete the login. In this way, a user and the enrolment server can confirm that the computing device 500 is a fully verified device before providing login-credentials that could be snooped and shared with the attacker if the computing device 500 were compromised.

In some examples, the enrolment server may automatically configure the firmware management parameters of the computing device 500 to ensure that future system boots are verified (or not) according to the enterprise police. In some cases, the enrolment server may terminate enrolment unless the security processor 508 can accurately attest to the firmware management parameters. In addition, the enrolment server can simply erase the firmware management parameters to de-enroll the computing device 500. While various preferred embodiments of the disclosure are described in the foregoing description and shown in the drawings, it is to be distinctly understood that this disclosure is not limited thereto but may be variously embodied to practice within the scope of the following claims. From the foregoing description, it will be apparent that various changes may be made without departing from the spirit and scope of the disclosure as defined by the following claims.

For a developer, the computing device 500 can be configured to allow developers to change the operating system and/or the firmware at will. The computing device 500 can enter a operating system developer mode automatically via an operating system task. The operating system developer mode may permit changing the operating system but not the firmware or recovery firmware. In a firmware developer mode, the computing device 500 is can erase and change the contents of the memory 506, including the write-protected portions. In either the operating system developer mode, the security processor 508 may erase secrets stored in non-volatile memory of the security processor 508, including a decryption key for data stored on the storage 504. In some cases, firmware management parameters of the security processor 508 may prevent alteration of the firmware or secrets controlled by the security processor 508. However, in other cases, once the operating system or the firmware developer mode is enabled, the computing device 500 may be configured to receive custom firmware management parameters and write the custom firmware management parameters to the security processor 508. With a change to the firmware management parameters, the computing device 500 could be configured to refrain from performing verification of the firmware or recovery firmware (e.g., bypassing a full or probabilistic verification check), however the security processor 508 may report that the firmware or recovery firmware was not checked, so that a new user logging in to the computing device 500 may still be alerted to an unverified device (e.g., through two-factor authentication).

Any owner-user of the computing device 500 may have the ability to configure the firmware management parameters for the computing device 500, at least during an initial log-in. This way, normal users can disable operating system or firmware developer mode and optionally select from different boot verification levels (e.g., specifying a higher or lower level of boot verification).

In some examples, the computing device 500 provides an interface from which the user can specify a password required to change the firmware management parameters. In other cases, the computing device 500 may generate a password for the user and upload the password to a user's account *(e.g.,* in a cloud-computing environment) so that the user can retrieve the password if and when the user wants to change the firmware management parameters.

When the computing device 500 is manufactured, the manufacturer may configure the computing device 500 to store a model specific BoardID in the non-volitile memory of the security processor 108. The BoardID may be used to lock the security processor firmware releases to a specific device model, remote-access server unlocks, or the like. The expected BoardID could be included in the header of the read-only portion of firmware. The computing device 500 may be configured to verify that the expected BoardID match the BoardID pre-programmed into the security processor 508.

Other data stored in the memory 506 can vary on a per-device basis and may be verified in similar ways that firmware or recovery firmware is verified. The security processor 508 can be configured to protect this data as well, *e.g.,* to prevent swapping the security processor 508 between boards, or modifying this data to have one device appear to be the wrong configuration.

This other data can include a header section with a different identifying byte sequence, and no subkey, and a body section including the model-specific data. The security processor 508 may verify a hardware identifier, a service tag, a wireless-access node calibration or serial data, etc. The security processor 508 may compare a generated hash of the other data to an expected hash and verify the other data when the two values match.

During manufacturing, this device-specific verification data can be stored into a write protectable area of the memory 506 just before write protection is enabled at the factory finalization step. There may be no signature for the header or body, because this other data varies on a per-device basis and only needs to be checked to make sure the data has not changed since the computing device 500 was manufactured. A hash of this data can be stored in the security processor 508 during the factory finalization step, after the data has been written to the memory 506.

While various preferred embodiments of the disclosure are described in the foregoing description and shown in the drawings, it is to be distinctly understood that this disclosure is not limited thereto but may be variously embodied to practice within the scope of the following claims. From the foregoing description, it will be apparent that various changes may be made without departing from the scope of the disclosure as defined by the following claims.

## Claims

1. A computing system (100) comprising:
an application processor (102, 502);
a memory (106, 506) comprising firmware of the computing system, the firmware comprising multiple blocks of the firmware; and
a security processor (108, 508) configured to verify the firmware as a condition to the application processor (102, 502) executing the firmware by:
determining respective probabilistic verification thresholds for the multiple blocks of the firmware;
determining respective weighting values for the multiple blocks of the firmware;
in response to a first block of the multiple blocks of the firmware having a first respective weighting value that does not exceed a first respective probabilistic verification threshold, determining to not verify the first block of the firmware; and
in response to a second block of the multiple blocks of the firmware having a second respective weighting value that exceeds a second respective probabilistic verification threshold, verifying the second block of the firmware based on whether an expected hash value determined for the second block of the firmware matches a generated hash value for the second block of the firmware.

2. The computing system (100) of claim 1, wherein the security processor is further configured to verify the firmware by:
setting a status of the firmware as verifiable in response to the expected hash value determined for the second block of the firmware matching the generated hash value for the second block of the firmware; or
setting the status of the firmware as not verifiable in response to the expected hash value determined for the second block of the firmware not matching the generated hash value for the second block of the firmware.

3. The computing system (100) of claim 2, wherein the expected hash value determined for the second block of the firmware matches the generated hash value for the second block of the firmware and the security processor is further configured to verify the firmware by:
determining whether the second block of the firmware is a last block of the multiple blocks of the firmware; and
indicating to the application processor that the firmware is verified in response to the status of the firmware being set to verifiable and second block of the firmware being the last block of the multiple blocks of the firmware.

4. The computing system (100) of claim 1, wherein the security processor is further configured to determine the respective weighting values by accessing a body section of the firmware to obtain the respective weighting values assigned to the multiple blocks of the firmware.

5. The computing system (100) of claim 1, wherein the security processor is further configured to determine the expected hash value for the second block of the firmware by accessing a body section of the firmware to obtain the expected hash value.

6. The computing system (100) of claim 5, wherein the security processor is further configured to obtain the expected hash value for the second block of the firmware by accessing a table in the body section of the firmware, the table comprising respective entries for each of the multiple blocks of the firmware that includes:
a respective address or a respective offset for the block of the firmware;
a respective size of the block of the firmware;
a respective expected hash value for the block of the firmware; or
the respective weighting value assigned to the block of the firmware.

7. The computing system (100) of claim 1, wherein the security processor is further configured to determine the respective probabilistic verification thresholds for each of the multiple blocks of the firmware using a random number generator.

8. The computing system (100) of claim 1, wherein the security processor is further configured to verify the second block of the firmware by generating the generated hash value for the second block of the firmware.

9. The computing system (100) of claim 1, wherein the security processor is further configured to determine the respective probabilistic verification thresholds for the multiple blocks of the firmware based on a maximum weighting value and a minimum weighting value from the respective weighting values the multiple blocks of the firmware.

10. The computing system (100) of claim 1, wherein:
the firmware verified by the security processor comprises a system firmware of the computing system and the memory further comprises a recovery firmware; or
the firmware verified by the security processor comprises a recovery firmware of the computing system and the memory further comprises a system firmware.

11. The computing system (100) of claim 10, wherein the security processor (108, 508) is configured to maintain firmware management parameters that include options for directing the security processor (108, 508) in verifying the firmware or the recovery firmware.

12. The computing system (100) of claim 11, wherein the security processor (108, 508) maintains the firmware management parameters in a write-protected portion of an internal memory of the security processor (108, 508).

13. A method of verifying firmware of a computing system, the firmware comprising multiple blocks, wherein the method comprises:
determining respective probabilistic verification thresholds for the multiple blocks of the firmware;
determining respective weighting values for the multiple blocks of the firmware;
in response to a first block of the multiple blocks of the firmware having a first respective weighting value that does not exceed a first respective probabilistic verification threshold, determining to not verify the first block of the firmware; and
in response to a second block of the multiple blocks of the firmware having a second respective weighting value that exceeds a second respective probabilistic verification threshold, verifying the second block of the firmware based on whether an expected hash value determined for the second block of the firmware matches a generated hash value for the second block of the firmware.

14. A computer-readable storage medium comprising instructions that, when executed by a security processor, cause the security processor of a computing system to perform the method of claim 13.

## Patentansprüche

1. Rechensystem (100), umfassend:
einen Anwendungsprozessor (102, 502);
einen Speicher (106, 506), der Firmware des Rechensystems umfasst, wobei die Firmware mehrere Blöcke der Firmware umfasst; und
einen Sicherheitsprozessor (108, 508), der dazu konfiguriert ist, die Firmware als Bedingung für den die Firmware ausführenden Anwendungsprozessor (102, 502) durch Folgendes zu verifizieren:
Bestimmen jeweiliger probabilistischer Verifizierungsschwellen für die mehreren Blöcke der Firmware;
Bestimmen jeweiliger Gewichtungswerte für die mehreren Blöcke der Firmware;
als Reaktion auf einen ersten Block der mehreren Blöcke der Firmware, der einen ersten jeweiligen Gewichtungswert aufweist, der eine erste jeweilige probabilistische Verifizierungsschwelle nicht überschreitet, Bestimmen, den ersten Block der Firmware nicht zu verifizieren; und
als Reaktion auf einen zweiten Block der mehreren Blöcke der Firmware, der einen zweiten jeweiligen Gewichtungswert aufweist, der eine zweite jeweilige probabilistische Verifizierungsschwelle überschreitet, Verifizieren des zweiten Blocks der Firmware basierend darauf, ob ein erwarteter Hash-Wert, der für den zweiten Block der Firmware bestimmt wurde, mit einem erzeugten Hash-Wert für den zweiten Block der Firmware übereinstimmt.

2. Rechensystem (100) nach Anspruch 1, wobei der Sicherheitsprozessor ferner dazu konfiguriert ist, die Firmware durch Folgendes zu verifizieren:
Einstellen eines Status der Firmware als verifizierbar als Reaktion auf den für den zweiten Block der Firmware bestimmten erwarteten Hash-Wert, der mit dem erzeugten Hash-Wert für den zweiten Block der Firmware übereinstimmt; oder
Einstellen des Status der Firmware als nicht verifizierbar als Reaktion auf den für den zweiten Block der Firmware bestimmten erwarteten Hash-Wert, der mit dem erzeugten Hash-Wert für den zweiten Block der Firmware nicht übereinstimmt.

3. Rechensystem (100) nach Anspruch 2, wobei der für den zweiten Block der Firmware bestimmte erwartete Hash-Wert, mit dem erzeugten Hash-Wert für den zweiten Block der Firmware übereinstimmt und der Sicherheitsprozessor ferner dazu konfiguriert ist, die Firmware durch Folgendes zu verifizieren:
Bestimmen, ob der zweite Block der Firmware ein letzter Block der mehreren Blöcke der Firmware ist; und
Angeben für den Anwendungsprozessor, dass die Firmware als Reaktion darauf, dass der Status der Firmware auf verifizierbar eingestellt ist, verifiziert wird und der zweite Block der Firmware der letzte Block der mehreren Blöcke der Firmware ist.

4. Rechensystem (100) nach Anspruch 1, wobei der Sicherheitsprozessor ferner dazu konfiguriert ist, die jeweiligen Gewichtungswerte zu bestimmen, indem er auf einen Hauptabschnitt der Firmware zugreift, um die jeweiligen Gewichtungswerte zu erhalten, die den mehreren Blöcken der Firmware zugewiesen sind.

5. Rechensystem (100) nach Anspruch 1, wobei der Sicherheitsprozessor ferner dazu konfiguriert ist, den erwarteten Hash-Wert für den zweiten Block der Firmware zu bestimmen, indem er auf einen Hauptabschnitt der Firmware zugreift, um den erwarteten Hash-Wert zu erhalten.

6. Rechensystem (100) nach Anspruch 5, wobei der Sicherheitsprozessor ferner dazu konfiguriert ist, den erwarteten Hash-Wert für den zweiten Block der Firmware durch Zugreifen auf eine Tabelle in dem Hauptabschnitt der Firmware zu erhalten, wobei die Tabelle entsprechende Einträge für jeden der mehreren Blöcke der Firmware umfasst, die Folgendes beinhaltet:
eine jeweilige Adresse oder einen jeweiligen Versatz für den Block der Firmware;
eine jeweilige Größe des Blocks der Firmware;
einen jeweiligen erwarteten Hash-Wert für den Block der Firmware; oder
den jeweiligen Gewichtungswert, der dem Block der Firmware zugeordnet ist.

7. Rechensystem (100) nach Anspruch 1, wobei der Sicherheitsprozessor ferner dazu konfiguriert ist, die jeweiligen probabilistischen Verifizierungsschwellen für jeden der mehreren Blöcke der Firmware unter Verwendung eines Zufallszahlengenerators zu bestimmen.

8. Rechensystem (100) nach Anspruch 1, wobei der Sicherheitsprozessor ferner dazu konfiguriert ist, den zweiten Block der Firmware zu verifizieren, indem er den erzeugten Hash-Wert für den zweiten Block der Firmware erzeugt.

9. Rechensystem (100) nach Anspruch 1, wobei der Sicherheitsprozessor ferner dazu konfiguriert ist, die jeweiligen probabilistischen Verifizierungsschwellen für die mehreren Blöcke der Firmware basierend auf einem maximalen Gewichtungswert und einem minimalen Gewichtungswert aus den jeweiligen Gewichtungswerten der mehreren Blöcke der Firmware zu bestimmen.

10. Rechensystem (100) nach Anspruch 1, wobei:
die durch den Sicherheitsprozessor verifizierte Firmware eine System-Firmware des Rechensystems umfasst und der Speicher ferner eine Wiederherstellungs-Firmware umfasst; oder
die durch den Sicherheitsprozessor verifizierte Firmware eine Wiederherstellungs-Firmware des Rechensystems umfasst und der Speicher ferner eine System-Firmware umfasst.

11. Rechensystem (100) nach Anspruch 10, wobei der Sicherheitsprozessor (108, 508) dazu konfiguriert ist, Firmware-Verwaltungsparameter beizubehalten, die Optionen zum Leiten des Sicherheitsprozesses (108, 508) beim Verifizieren der Firmware oder der Wiederherstellungs-Firmware beinhalten.

12. Rechensystem (100) nach Anspruch 11, wobei der Sicherheitsprozessor (108, 508) die Firmware-Verwaltungsparameter in einem schreibgeschützten Abschnitt eines internen Speichers des Sicherheitsprozessors (108, 508) beibehält.

13. Verfahren zum Verifizieren von Firmware eines Rechensystems, wobei die Firmware mehrere Blöcke umfasst, wobei das Verfahren Folgendes umfasst:
Bestimmen jeweiliger probabilistischer Verifizierungsschwellen für die mehreren Blöcke der Firmware;
Bestimmen jeweiliger Gewichtungswerte für die mehreren Blöcke der Firmware;
als Reaktion auf einen ersten Block der mehreren Blöcke der Firmware, der einen ersten jeweiligen Gewichtungswert aufweist, der eine erste jeweilige probabilistische Verifizierungsschwelle nicht überschreitet,
Bestimmen, den ersten Block der Firmware nicht zu verifizieren; und
als Reaktion auf einen zweiten Block der mehreren Blöcke der Firmware, der einen zweiten jeweiligen Gewichtungswert aufweist, der eine zweite jeweilige probabilistische Verifizierungsschwelle überschreitet, Verifizieren des zweiten Blocks der Firmware basierend darauf, ob ein erwarteter Hash-Wert, der für den zweiten Block der Firmware bestimmt wurde, mit einem erzeugten Hash-Wert für den zweiten Block der Firmware übereinstimmt.

14. Computerlesbares Speichermedium, umfassend Anweisungen, die bei Ausführung durch einen Sicherheitsprozessor den Sicherheitsprozessor eines Rechensystems veranlassen, das Verfahren nach Anspruch 13 durchzuführen.

## Revendications

1. Système informatique (100) comprenant :
un processeur d'application (102, 502) ;
une mémoire (106, 506) comprenant le micrologiciel du système informatique, le micrologiciel comprenant de multiples blocs du micrologiciel ; et
un processeur de sécurité (108, 508) configuré pour vérifier le micrologiciel en tant que condition pour que le processeur d'application (102, 502) exécute le micrologiciel en :
déterminant des seuils de vérification probabilistes respectifs pour les multiples blocs du micrologiciel ;
déterminant des valeurs de pondération respectives pour les multiples blocs du micrologiciel ;
en réponse à un premier bloc des multiples blocs du micrologiciel ayant une première valeur de pondération respective qui ne dépasse pas un premier seuil de vérification probabiliste respectif, déterminant de ne pas vérifier le premier bloc du micrologiciel ; et
en réponse à un second bloc des multiples blocs du micrologiciel ayant une seconde valeur de pondération respective qui dépasse un second seuil de vérification probabiliste respectif, vérifiant le second bloc du micrologiciel en fonction du fait qu'une valeur de hachage attendue déterminée pour le second bloc du micrologiciel correspond ou non à une valeur de hachage générée pour le second bloc du micrologiciel.

2. Système informatique (100) selon la revendication 1, dans lequel le processeur de sécurité est également configuré pour vérifier le micrologiciel en :
définissant un statut du micrologiciel comme vérifiable en réponse à la valeur de hachage attendue déterminée pour le second bloc du micrologiciel correspondant à la valeur de hachage générée pour le second bloc du micrologiciel ; ou
définissant le statut du micrologiciel comme non vérifiable en réponse à la valeur de hachage attendue déterminée pour le second bloc du micrologiciel ne correspondant pas à la valeur de hachage générée pour le second bloc du micrologiciel.

3. Système informatique (100) selon la revendication 2, dans lequel la valeur de hachage attendue déterminée pour le second bloc du micrologiciel correspond à la valeur de hachage générée pour le second bloc du micrologiciel et le processeur de sécurité est également configuré pour vérifier le micrologiciel en :
déterminant si le second bloc du micrologiciel est un dernier bloc des multiples blocs du micrologiciel ; et
indiquant au processeur d'application que le micrologiciel est vérifié en réponse au statut du micrologiciel étant défini sur vérifiable et au second bloc du micrologiciel étant le dernier bloc des multiples blocs du micrologiciel.

4. Système informatique (100) selon la revendication 1, dans lequel le processeur de sécurité est également configuré pour déterminer les valeurs de pondération respectives en accédant à une section de corps du micrologiciel pour obtenir les valeurs de pondération respectives attribuées aux multiples blocs du micrologiciel.

5. Système informatique (100) selon la revendication 1, dans lequel le processeur de sécurité est également configuré pour déterminer la valeur de hachage attendue pour le second bloc du micrologiciel en accédant à une section de corps du micrologiciel pour obtenir la valeur de hachage attendue.

6. Système informatique (100) selon la revendication 5, dans lequel le processeur de sécurité est également configuré pour obtenir la valeur de hachage attendue pour le second bloc du micrologiciel en accédant à une table dans la section de corps du micrologiciel, la table comprenant des entrées respectives pour chacun des multiples blocs du micrologiciel qui comporte :
une adresse respective ou un décalage respectif pour le bloc du micrologiciel ;
une taille respective du bloc du micrologiciel ;
une valeur de hachage attendue respective pour le bloc du micrologiciel ; ou
la valeur de pondération respective attribuée au bloc du micrologiciel.

7. Système informatique (100) selon la revendication 1, dans lequel le processeur de sécurité est également configuré pour déterminer les seuils de vérification probabilistes respectifs pour chacun des multiples blocs du micrologiciel à l'aide d'un générateur de nombres aléatoires.

8. Système informatique (100) selon la revendication 1, dans lequel le processeur de sécurité est également configuré pour vérifier le second bloc du micrologiciel en générant la valeur de hachage générée pour le second bloc du micrologiciel.

9. Système informatique (100) selon la revendication 1, dans lequel le processeur de sécurité est également configuré pour déterminer les seuils de vérification probabilistes respectifs pour les multiples blocs du micrologiciel sur la base d'une valeur de pondération maximale et d'une valeur de pondération minimale à partir des valeurs de pondération respectives des multiples blocs du micrologiciel.

10. Système informatique (100) selon la revendication 1, dans lequel :
le micrologiciel vérifié par le processeur de sécurité comprend un micrologiciel système du système informatique et la mémoire comprend également un micrologiciel de récupération ; ou
le micrologiciel vérifié par le processeur de sécurité comprend un micrologiciel de récupération du système informatique et la mémoire comprend également un micrologiciel système.

11. Système informatique (100) selon la revendication 10, dans lequel le processeur de sécurité (108, 508) est configuré pour conserver des paramètres de gestion de micrologiciel qui incluent des options pour diriger le processeur de sécurité (108, 508) dans la vérification du micrologiciel ou du micrologiciel de récupération.

12. Système informatique (100) selon la revendication 11, dans lequel le processeur de sécurité (108, 508) conserve les paramètres de gestion de micrologiciel dans une partie protégée en écriture d'une mémoire interne du processeur de sécurité (108, 508).

13. Procédé de vérification du micrologiciel d'un système informatique, le micrologiciel comprenant de multiples blocs, dans lequel le procédé comprend :
la détermination de seuils de vérification probabilistes respectifs pour les multiples blocs du micrologiciel ;
la détermination des valeurs de pondération respectives pour les multiples blocs du micrologiciel ;
en réponse à un premier bloc des multiples blocs du micrologiciel ayant une première valeur de pondération respective qui ne dépasse pas un premier seuil de vérification probabiliste respectif,
la détermination de ne pas vérifier le premier bloc du micrologiciel ; et
en réponse à un second bloc des multiples blocs du micrologiciel ayant une seconde valeur de pondération respective qui dépasse un second seuil de vérification probabiliste respectif, la vérification du second bloc du micrologiciel en fonction du fait qu'une valeur de hachage attendue déterminée pour le second bloc du micrologiciel correspond ou non à une valeur de hachage générée pour le second bloc du micrologiciel.

14. Support de stockage lisible par ordinateur comprenant des instructions qui, lorsqu'elles sont exécutées par un processeur de sécurité, amènent le processeur de sécurité d'un système informatique à réaliser le procédé selon la revendication 13.
